# EUROPÄISCHE PATENTSCHRIFT

(11) **EP 1 927 498 B1**
(45) Veröffentlichungstag und Bekanntmachung des Hinweises auf die Patenterteilung: **08.06.2011**
(21) Anmeldenummer: 07022997.6
(22) Anmeldetag: 28.11.2007
(51) Int. Cl.: B60K 17/16, F16H 48/30, F16H 57/02

(54) **Antriebsanordnung mit Zwischenwelle und Kupplungseinheit**
Drive assembly with intermediate shaft and coupling unit
Agencement d'entraînement à arbre intermédiaire et unité de couplage

(30) Priorität: 01.12.2006 DE 102006057218
(43) Veröffentlichungstag der Anmeldung: 04.06.2008
(73) Patentinhaber: GKN Driveline International GmbH, 53797 Lohmar (DE)
(72) Erfinder: Chludek, Adrian, Dipl.-Ing., 53757 St. Augustin (DE); Gasch, Christian, Dipl.-Ing., 53797 Lohmar (DE); Gaßmann, Theodor, Dipl.-Ing., 53721 Siegburg (DE); Grunwald, Artur, Dipl.-Ing.(FH), 51588 Nümbrecht (DE)
(74) Vertreter: Oberwalleney, Stephan

(56) Entgegenhaltungen:
- EP-A- 0 856 676
- EP-A- 1 502 800
- GB-A- 2 235 502
- US-A- 5 080 210

## Beschreibung

Die Erfindung betrifft eine Antriebsanordnung mit Zwischenwelle und Kupplungseinheit für den Einsatz im Achsantrieb eines Kraftfahrzeugs. Derartige Antriebsanordnungen dienen zur Drehmomentübertragung zwischen einem Achsdifferential und einer Seitenwelle des Kraftfahrzeugs, und zwar insbesondere in vorderachsgetriebenen Kraftfahrzeugen mit quer eingebautem Motor. Mit der Kupplungseinheit wird eine aktive Steuerung der Drehmomentverteilung zwischen den Seitenwellenrädern des Achsdifferentials bzw. den Seitenwellen des Kraftfahrzeugs ermöglicht.

Aus der DE 103 12 347 A1 ist bereits eine Differentialanordnung mit Zwischenwelle und steuerbarer Kupplungseinheit für die Hinterachse eines Kraftfahrzeugs als Hauptantriebsachse bekannt.

Aus der DE 10 2006 012 218 A1 ist eine Antriebsanordnung mit Getriebe, Kupplung und Differential für eine Vorderachse bekannt. Die Anordnung umfaßt eine auch als 'Linkshaft' bezeichnete Zwischenwelle, die das Differentialgetriebe mit einer Seitenwelle antriebsmäßig verbindet. Zum Sperren der Ausgleichswirkung zwischen den beiden Seitenwellen ist die steuerbare Kupplung vorgesehen, deren Innenlamellenträger mit der Zwischenwelle und deren Außenlamellenträger mit dem Differentialträger drehfest verbunden ist. Der Kupplungskorb ist in einem Kupplungsgehäuse drehbar gelagert, das an das Differentialgehäuse fest angeschlossen ist. Zur Betätigung der Lamellenkupplung dient ein Aktuator in Form einer Kugelrampenanordnung, der von einem am Kupplungsgehäuse angeflanschten Elektromotor angesteuert wird. Der Elektromotor wird durch eine elektronische Steuereinheit (ECU) gesteuert.

Aus der US 5 083 986 ist eine steuerbare Kupplungsanordnung mit einer Pilotkupplung, einer Hauptkupplung, einem Elektromagneten, einer Ankerscheibe und einem Rampenmechanismus bekannt. Durch Betätigen des Elektromagneten wird die Ankerscheibe angezogen, so daß die Pilotkupplung im Schließsinn beaufschlagt wird. Hierdurch werden die beiden Rampenscheiben gegeneinander verdreht und gespreizt, wodurch die Hauptkupplung im Schließsinn beaufschlagt wird. Es werden verschiedene Anwendungsbeispiele für die Kupplungsanordnung vorgeschlagen, nämlich als Sperre in einem Mittendifferential, einem Achsdifferential oder einem Verteilergetriebe oder als sogenannte Hang-on Kupplung zwischen einer Längsantriebswelle und einem Hinterachsdifferential.

Aus der US 6 109 408 ist eine ähnliche elektromagnetisch steuerbare Kupplungsanordnung mit Pilot- und Hauptkupplung bekannt. Es sind verschiedene Ausführungsbeispiele für die Kupplungsanordnung innerhalb des Längsantriebsstrangs eines Kraftfahrzeugs gezeigt. Durch Schließen der Kupplung wird die Hinterachse an den Antriebsstrang angekoppelt, was auch als 'Hang-on' oder 'On demand' Konzept bekannt ist. Die Kupplungsnabe ist innerhalb eines ortsfesten Aufnahmeteils für die Magnetspule drehbar gelagert, wobei das Aufnahmeteil an der Fahrzeugkarosserie bzw. dem Gehäuse des Hinterachsdifferentials angeschlossen ist.

Aus der US 2005/0026732 A1 bzw. der entsprechenden EP 1 502 800 A1 ist eine Antriebsanordnung mit Zwischenwelle und Kupplungseinheit bekannt. Die Kupplungseinheit umfaßt einen Kupplungskorb, der mit dem Differentialkorb des Achsdifferentials antriebsverbunden ist. Die Kupplungseinheit ist in einem zweiteiligen Kupplungsgehäuse angeordnet, das an das Getriebegehäuse angeflanscht ist. In dem Kupplungsgehäuse ist ein axialer Durchbruch zum Getriebegehäuse vorgesehen, durch den Schmiermittel fließen kann.

Aus der US 5 080 210 ist eine Viscokupplung für einen vorderen Achsantrieb eines Kraftfahrzeugs bekannt, die mittels eines hydraulischen Aktuators steuerbar ist. Der hydraulische Aktuator ist benachbart zu der Viscokupplung angeordnet und umfaßt einen Kolben, der über ein Stellglied das Lamellenpaket der Viscokupplung beaufschlagen kann. Der Kolben ist in einem zylindrischen Gehäuseteil aufgenommen, an dem sich auch ein hydraulischer Anschluß befindet.

Die Integration aktiver Sperrsysteme in die Hauptantriebsachse eines Kraftfahrzeugs gestaltet sich häufig aufgrund eines knapp bemessenen verfügbaren Bauraums als schwierig. Hinzu kommen gegebenenfalls aufwendige Umkonstruktionen an stehenden Bauteilen, an welche die Sperrsysteme anzuschließen sind, wodurch die Variantenanzahl und damit die Kosten in die Höhe getrieben werden.

Hiervon ausgehend liegt der vorliegenden Erfindung die Aufgabe zugrunde, eine Antriebsanordnung mit Zwischenwelle und steuerbarer Kupplungseinheit zum Einsatz im Achsantrieb eines Kraftfahrzeugs vorzuschlagen, die kompakt baut und eine einfache Integration in bestehende Antriebskonzepte ermöglicht.

Die Lösung besteht in einer Antriebsanordnung zum Einsatz im Achsantrieb eines Kraftfahrzeugs zwischen einem Achsdifferential und einer Seitenwelle, umfassend eine um eine Drehachse A drehbar gelagerte Zwischenwelle, deren erstes Ende mit einem Ausgangsrad des Achsdifferentials drehfest verbunden ist und deren zweites Ende zumindest mittelbar mit der Seitenwelle drehfest verbunden ist; eine koaxial zur Zwischenwelle angeordnete steuerbare Kupplungseinheit, die einen mit einem Differentialträger des Achsdifferentials drehfest verbundenen und gegenüber einem Lagerträger um die Drehachse A drehbar gelagerten Kupplungskorb mit Außenlamellen und eine mit der Zwischenwelle drehfest verbundene Kupplungsnabe mit Innenlamellen umfaßt, wobei die Außenlamellen und die Innenlamellen axial abwechselnd angeordnet sind und gemeinsam ein Lamellenpaket bilden; der Kupplungskorb erstreckt sich in axialer Richtung vom Differentialträger bis zum Lagerträger und ist mit seinem differentialseitigen Ende mittels einer ersten Drehdichtung gegenüber einem Gehäuse des Achsdifferentials abgedichtet und mit seinem trägerseitigen Ende mittels einer zweiten Drehdichtung gegenüber dem Lagerträger, wobei der Kupplungskorb ein geschlossenes Gehäuse bildet, wobei die Kupplungseinheit eine Magnetspule, eine von der Magnetspule ansteuerbare Pilotkupplung, einen von der Pilotkupplung betätigbaren Rampenmechanismus und eine von dem Rampenmechanismus betätigbare Hauptkupplung, die den Kupplungskorb und die Kupplungsnabe umfaßt, aufweist; und wobei eine elektronische Regeleinheit mit einem elektronischen Stabilitätsprogramm (ESP) vorgesehen ist, mit der - in Abhängigkeit von zumindest einem Fahrzeugparameter - der Sperrgrad der Kupplungseinheit sowie die Fahrdynamik des Kraftfahrzeugs regelbar ist.

Der Vorteil der erfindungsgemäßen Antriebsanordnung liegt im kompakten und einfachen Aufbau, so daß eine einfache Integration in bestehende Antriebskonzepte ermöglicht wird. Dadurch, daß sich der Kupplungskorb in axialer Richtung vom Differentialträger bis zum Lagerträger erstreckt und ein geschlossenes Gehäuse bildet, sind keine zusätzlichen den Kupplungskorb umgebenden Gehäusebauteile erforderlich. Somit hat der Kupplungskorb neben seiner Funktion als Außenlamellenträger auch eine dichtende Wirkung, da er mit seiner Gehäusefunktion des Eindringen von Schmutz in die bzw. das Auslaufen von Schmiermittel aus der Kupplung verhindert.

Der Kupplungskorb, der vorzugsweise eine nach außen hin geschlossene Oberfläche aufweist, ist differentialseitig mittels der ersten Drehdichtung zum Differentialgehäuse hin abgedichtet und gelenkseitig mittels einer zweiten Drehdichtung zum Trägerelement hin abgedichtet. Unter der Bezeichnung Drehdichtung werden dabei rotatorische Dichtungen verstanden, die zwei relativ zueinander drehende Bauteile gegeneinander abdichten. Für die erste Drehdichtung kann insbesondere eine berührungsloser Wellendichtring zum Einsatz kommen. Die zweite Drehdichtung ist vorzugsweise in Form eines Dichtrings gestaltet, der mit einem der beiden Bauteile Kupplungskorb oder Lagerträger fest verbunden ist und einen zwischen diesen Bauteilen gebildeten Ringspalt überdeckt. Beispielsweise kann der Dichtring auf einer Außenfläche des Kupplungskorbs befestigt sein und eine zylindrische Außenfläche des Lagerträgers axial übergreifen, so daß ein Eindringen von Schmutz in den Ringspalt verhindert wird.

Die Kupplungseinheit mit Pilotkupplung und Hauptkupplung hat den Vorteil einer Selbstverstärkung der Betätigungskraft. Zur Betätigung der Pilotkupplung sind nämlich nur relativ geringe Stromstärken erforderlich, die insbesondere weniger als drei Ampere betragen. Diese geringen Ströme genügen, um die Pilotkupplung zu betätigen, die daraufhin über den Rampenmechanismus die Hauptkupplung schließt. Ein separater Elektromotor zum Betätigen der Kupplungseinheit ist nicht erforderlich, was sich günstig auf das sogenannte 'Packaging' auswirkt.

Vorzugsweise umfaßt der Kupplungskorb eine mit dem Differentialträger drehfest verbundene Anschlußhülse, ein hieran anschließendes Bodenteil und ein hieran anschließendes Mantelteil, dessen freies Ende gegenüber dem Lagerträger abgedichtet ist. Nach einer bevorzugten Ausgestaltung weist die Anschlußhülse eine Längsverzahnung auf, die in eine entsprechende Gegenverzahnung des Differentialträgers eingesteckt werden kann. Hiermit wird eine einfache Montage ermöglicht, wobei eine aufwendige Gehäuseschnittstelle nicht erforderlich ist. Es ist fertigungstechnisch besonders günstig, wenn der Kupplungskorb einteilig hergestellt wird, insbesondere hinterschnittfrei. Selbstverständlich können einzelne der genannten Bauteile auch zunächst separat hergestellt und nachträglich miteinander verbunden werden. Die Kupplungseinheit umfaßt weiter ein Deckelelement, das den Kupplungskorb verschließt und diesen über ein Lager relativ zum Trägerelement um die Drehachse drehbar lagert. Dabei schließen der Kupplungskarb, das Deckelelement und die Kupplungsnabe eine nach außen abgedichteten Ringkammer ein. Vorzugsweise sind die Pilotkupplung, der Rampenmechanismus und die Hauptkupplung innerhalb der Ringkammer und die Magnetspule außerhalb der Ringkammer angeordnet.

Nach einer bevorzugten Ausgestaltung ist das Deckelelement - im Längshalbschnitt betrachtet - C-förmig gestaltet und bildet einen in Richtung zum Lagerträger offenen Ringraum, in dem die Magnetspule angeordnet ist. Die Magnetspule ist vorzugsweise an einem Halteelement befestigt, das den Ringraum des Deckelelements axial begrenzt und mit dem Lagerträger fest verbunden ist. Das Halteelement ist insbesondere aus ferromagnetischem Material, so daß sich ein torusförmiges Magnetfeld um die Magnetspule ausbilden kann. Das Deckelelement weist vorzugsweise einen inneren Hülsenabschnitt auf, der mittels eines Lagers gegenüber dem Halteelement um die Drehachse drehbar gelagert ist. Dabei ist das drehende Deckelelement gegenüber dem stehenden Halteelement so gelagert, daß minimale Radialspalte zwischen den beiden genannten Bauteilen gebildet sind. Alternativ zum Deckelelement kann auch der Kupplungskorb mit seinem Mantelteil relativ zum Lagerträger gelagert sein. Nach einer bevorzugten Weiterbildung ist die Zwischenwelle an ihrem dem Achsdifferential entfernten Ende gegenüber dem Deckelelement bzw. dem Lagerträger mittels eines Lagers drehbar gelagert, so daß Sekundärmomente der Welle abgestützt werden können.

Vorzugsweise ist die Kupplungsnabe in Form einer Hülse gestaltet, die auf der Zwischenwelle mittels einer Längsverzahnung drehfest gehalten ist. In Richtung Gelenk bildet der Verzahnungsauslauf der Längsverzahnung einen ersten axialen Anschlag. Der Kupplungskorb ist vorzugsweise mittels eines im Bodenteil aufgenommenen Lagers auf der Kupplungsnabe drehbar gelagert und gegenüber dieser mittels einer Drehdichtung abgedichtet. Dabei bildet eine Schulter auf der Kupplungsnabe, gegen die der Lagerinnenring des Lagers abgestützt ist, einen zweiten Axialanschlag für die Kupplungsnabe. Vorzugsweise ist zwischen der Zwischenwelle und der Kupplungsnabe ein Dichtring vorgesehen ist, insbesondere ein in einer inneren Ringnut der Kupplungsnabe einsitzender O-Ring. Dieser dichtet den mit Getriebeöl gefüllten Differentialraum nach außen hin ab. Die Kupplungsnabe kann prinzipiell auch einteilig mit der Zwischenwelle hergestellt sein, was den Vorteil einer geringeren Teilezahl hätte.

Nach einer bevorzugten Ausgestaltung ist das Deckelelement radial innen mittels einer Drehdichtung gegenüber der Kupplungsnabe und radial außen mittels eines Dichtrings, insbesondere eines O-Rings, gegenüber dem Korbteil abgedichtet. So wird verhindert, daß im Kupplungskorb befindliches Schmier- und Kühlöl in die Umgebung entweicht bzw. aus der Umgebung Schmutz in die Ringkammer gelangt.

In bevorzugter Ausgestaltung ist in dem Halteelement bzw. in dem Lagerträger eine Kabeldurchführung vorgesehen, die zur Durchführung eines die Magnetspule ansteuernden Stromkabels dient. Dabei erfüllt die Kabeldurchführung gleichzeitig die Funktion einer Drehsicherung für das in einer Bohrung des Lagerträgers aufgenommene Halteelement. Der Lagerträger hat vorzugsweise zumindest einen Haltearm zum Verbinden mit einem Motorbauteil des Kraftfahrzeugs. Bis auf die Anbindung des Lagerträgers mit seinem Haltearm an das Motorbauteil sind keine konstruktiven Anpassungen an die erfindungsgemäße Antriebsanordnung erforderlich.

Nach der Erfindung ist eine elektronische Regeleinheit vorgesehen, die - in Abhängigkeit von zumindest einem Fahrzeugparameter - den Sperrgrad der Kupplungseinheit sowie zumindest ein weiteres System des Kraftfahrzeugs regelt. Dabei wird der Sperrgrad der Kupplungseinheit in Abhängigkeit vom Traktionsbedarf der mit den Seitenwellen antriebsverbundenen Räder eingestellt. Durch Sperren der Kupplung wird die Drehzahl der Zwischenwelle an die Drehzahl des Differentialträgers angepaßt, so daß eine Sperrwirkung zwischen den Seitenwellen und damit zwischen den beiden Rädern erzeugt wird. Nach der Erfindung umfaßt die elektronische Regeleinheit mehrere Module zur Regelung eines zugehörigen Regelsystems des Kraftfahrzeugs, insbesondere ein elektronisches Stabilitätsprogramm (ESP) zur Regelung der Fahrdynamik des Kraftfahrzeugs. In Ergänzung hierzu kann die elektronische Regeleinheit insbesondere eine Steuerfunktion eines Motormanagementsystems und/oder eines Getriebemanagementsystems und/oder eines Anti-Blockiersystem der Bremsen und/oder eines Traktionskontrollsystems der Räder wahrnehmen. Durch die funktionale Integration der Regelsysteme kann auf eine zusätzliche Regeleinheit für die Kupplungseinheit verzichtet werden. Die Verwendung einer Kupplungseinheit mit Pilotkupplung und Hauptkupplung ist für die elektronische Integration besonders günstig, da zur Ansteuerung nur geringe Stromstärken von weniger als fünf Ampere, insbesondere von etwa drei Ampere erforderlich sind, die von einer elektronischen Regeleinheit zur Fahrdynamikregelung ohne weiteres aufgebracht werden können.

Bevorzugte Ausführungsbeispiele werden nachstehend anhand der Zeichnungsfiguren erläutert. Hierin zeigt
- Figur 1: eine erfindungsgemäße Antriebsanordnung in einer ersten Ausführungsform im Längsschnitt;
- Figur 2: eine erfindungsgemäße Antriebsanordnung in einer zweiten Ausführungsform im Längsschnitt;
- Figur 3: eine erfindungsgemäße Antriebsanordnung in einer dritten Ausführungsform im Längsschnitt;
- Figur 4: eine erfindungsgemäße Antriebsanordnung in einer vierten Ausführungsform im Längsschnitt;
- Figur 5: eine erfindungsgemäße Antriebsanordnung in einer fünften Ausführungsform im Längsschnitt;
- Figur 6: eine erfindungsgemäße Antriebsanordnung in einer sechsten Ausführungsform im Längsschnitt;
- Figur 7: die Antriebsanordnung nach einer der Figuren 1 bis 6 in Axialansicht;
- Figur 8: den Antriebsstrang eines Kraftfahrzeugs mit Vorderachsantrieb in einer ersten Ausführungsform mit einer erfindungsgemäßen Antriebsanordnung gemäß einer der Figuren 1 bis 6 in schematischer Darstellung;
- Figur 9: den Antriebsstrang eines Kraftfahrzeugs mit Vorderachsantrieb in einer zweiten Ausführungsform mit einer erfindungsgemäßen Antriebsanordnung gemäß einer der Figuren 1 bis 6 in schematischer Darstellung;
- Figur 10: schematisch das Doppelplanetendifferential aus Figur 9 im Querschnitt;
- Figur 11: den Antriebsstrang aus Figur 8 oder 9 mit Regeleinheit zur Regelung des Sperrgrads der Kupplungseinheit.

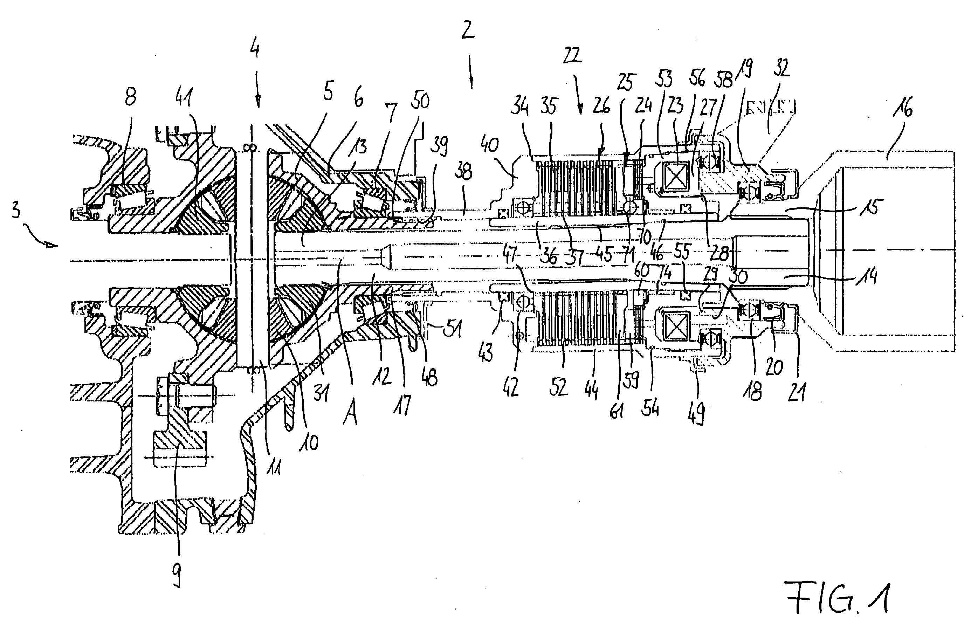

Figur 1 zeigt eine erfindungsgemäße Antriebsanordnung 2, die in einer Antriebsachse 3 eines hier nicht dargestellten Kraftfahrzeugs zum Einsatz kommt und zum gesteuerten Sperren der Ausgleichsbewegung eines Achsdifferentials der Antriebsachse dient. Das Kraftfahrzeug ist insbesondere frontgetrieben, wobei die Antriebsachse die Vorderachse darstellt.

Die Antriebsachse 3, welche in Figur 1 nur teilweise dargestellt ist, umfaßt ein Achsdifferential 4 mit einem Differentialträger 5, der in einem Gehäuse 6 mittels zweier Wälzlager 7, 8 um die Drehachse A drehbar gelagert ist. Der Differentialträger 5 ist von einem hier nicht gezeigten Antriebsritzel über ein Ringrad 9 drehend antreibbar. Im Differentialträger 5 sind mehrere Differentialräder 10 auf einem zur Drehachse A senkrecht stehenden Zapfen 11 drehbar gehalten, die gemeinsam mit dem Differentialträger 5 umlaufen und die mit zwei koaxial zur Drehachse A innerhalb des Differentialträgers 5 drehbar gehaltenen Ausgangsrädem 31, 41 kämmen. Durch den Verzahnungseingriff mit den Differentialrädern 10 sind die beiden Ausgangsräder 31, 41 miteinander gekoppelt und haben untereinander eine ausgleichende Wirkung. Das erste der beiden Ausgangsräder 31 ist über eine Zwischenwelle 12, auf die weiter unten näher eingegangen wird, mit einer ersten Seitenwelle antriebsverbunden. Das gegenüberliegende zweite Ausgangsrad 41 ist mit der zweiten Seitenwelle der Vorderachse antriebsmäßig verbunden. Die beiden Seitenwellen dienen zur Drehmomentübertragung auf die Vorderräder des Kraftfahrzeugs. Es ist ersichtlich, daß das Achsdifferential 4 vorliegend in Form eines Kegelraddifferentials gestaltet ist, wobei die Differentialräder 10 und die Ausgangsräder 31, 41 in Form von Kegelrädern gestaltet sind. Alternativ hierzu kann das Achsdifferential auch andere Gestaltungsformen aufweisen, beispielsweise als Kronenraddifferential.

Die Zwischenwelle 12 weist ein mit einer Wellenverzahnung versehenes erstes Ende 13 auf, mit der es in eine entsprechende Gegenverzahnung des Ausgangsrads 31 drehfest eingreift. An ihrem entgegengesetzten zweiten Ende 14 hat die Zwischenwelle 12 eine weitere Wellenverzahnung, die zur Drehmomentübertragung in eine verzahnte Nabe 15 eines Gelenkaußenteils 16 eines nicht näher dargestellten Gleichlaufdrehgelenks eingesteckt ist. Die Zwischenwelle 12 ist differentialseitig mittelbar über das Wälzlager 7 gegenüber dem Gehäuse 6 um die Drehachse A drehbar gelagert. Und zwar ist die Zwischenwelle 12 an ihrem ersten Ende 13 in einem Hülsenansatz 17 des Differentialträgers 5 drehbar aufgenommen, der seinerseits mittels des Wälzlagers 7 in dem Gehäuse 6 drehbar gehalten ist. Gelenkseitig ist die Zwischenwelle 12 über ein Lager 18 mittelbar gegenüber einem Lagerträger 19 gelagert. Ein zwischen der Nabe 15 des Gelenkaußenteils 16 und dem Lagerträger 19 gebildeter Ringspalt wird mittels einer berührenden Drehdichtung 20, die in Form eines Radialwellendichtrings gestaltet ist, abgedichtet. Zusätzlich ist auf einer Außenfläche der Nabe 15 ein berührungsloser Dichtring 21 befestigt, der im Halblängsschnitt betrachtet ein etwa C-förmiges Profil aufweist und dessen außenliegender Mantelabschnitt einen ringförmigen axialen Ansatz des Lagerträgers 19 axial übergreift. Der Dichtring 21 soll das Eindringen von grobem Schmutz in den Ringraum verhindern.

Die Antriebsanordnung 2 umfaßt neben der Zwischenwelle 12 eine Kupplungseinheit 22 mit einem Kupplungskorb 34, in dem Außenlamellen 35 drehfest und axial beweglich aufgenommen sind, und einer relativ hierzu drehbaren Kupplungsnabe 36, an der Innenlamellen 37 drehfest und axial beweglich gehalten sind. Die Außenlamellen 35 und die Innenlamellen 37 sind axial abwechselnd angeordnet und bilden gemeinsam das Lamellenpaket der Hauptkupplung 26. Als weitere Bauteile umfaßt die Kupplungseinheit 22 eine Magnetspule 23, eine von der Magnetspule 23 ansteuerbare Pilotkupplung 24 und einen von der Pilotkupplung 24 betätigbaren Rampenmechanismus 25, der die Hauptkupplung 26 betätigt. Die Kupplungseinheit 22 dient zum Ankoppeln der Zwischenwelle 12 an den Differentialträger 5. Durch Betätigung der Hauptkupplung 24 im Schließsinne wird nämlich - mittelbar über den Differentialträger 5 - eine Sperrung zwischen der Zwischenwelle 12 bzw. der ersten Seitenwelle und der entgegengesetzt gerichteten zweiten Seitenwelle bewirkt, so daß eine Ausgleichsbewegung der beiden Seitenwellen zueinander bedarfsweise reduziert wird.

Die Funktionsweise der Kupplungseinheit 22 ist folgendermaßen. Durch Aktivieren der Magnetspule 23 wird eine Ankerplatte 59 in Richtung Magnetspule gezogen, so daß die Pilotkupplung 24 im Schließsinne betätigt wird. Die Außenlamellen der Pilotkupplung 24 sind in dem Kupplungskorb 34 axial beweglich und drehfest gehalten, während die Innenlamellen der Pilotkupplung 24 auf der profilierten Außenfläche einer Stellscheibe 60 axial beweglich und drehfest gehalten sind. Die Stellscheibe 60, welche Teil des Rampenmechanismus 25 ist, ist auf einer Außenfläche der Kupplungsnabe 36 drehbar gelagert und über ein Axiallager 70 gegenüber einem mit dem Kupplungskorb 36 fest verbundenen Deckelelement 53 axial abgestützt. Insofern bewirkt ein Schließen der Pilotkupplung 24 ein Angleichen der Drehzahl der Steilscheibe 60 an die des Kupplungskorbs 34, das heißt eine Verdrehung der Stelischeibe 60 relativ zur Kupplungsnabe 36. Der Rampenmechanismus 25 umfaßt neben der Stellscheibe 60 eine Druckscheibe 61 zum Beaufschlagen des Lamellenpakets der Hauptkupplung 26, die drehfest mit der Kupplungsnabe 36 verbunden ist. Hierfür hat die Druckscheibe 61 eine zentrale Bohrung mit einem Innenprofil, mit dem sie in gegengleiches Außenprofil der Kupplungsnabe 36 eingreift. In den einander zugewandten Stirnflächen haben die Stellscheibe 60 und die Druckscheibe 61 mehrere über den Umfang verteilte Kugelrillen mit abnehmender Tiefe. Jeweils zwei einander gegenüberliegende Kugelrillen haben eine gegenläufige Steigung in beiden Drehrichtungen und bilden ein Bahnpaar zur Aufnahme einer Kugel 71. Durch Verdrehen der Stellscheibe 60 gegenüber der Druckscheibe 61 wandern die Kugeln 71 in Bereiche geringerer Rillentiefe, so daß die Druckscheibe 61 in Richtung Lamellenpaket 35, 37 verschoben wird. Auf diese Weise wird die Hauptkupplung 26 geschlossen.

Der Kupplungskorb 34 hat zur Drehmomenteinleitung einen Hülsenansatz 38, dessen freies Ende über eine Längsverzahnung 39 mit dem Hülsenansatz 17 des Differentialträgers 5 drehfest verbunden ist. Dabei ist zur Zentrierung des Kupplungskorbs 34 auf der Längsachse vorgesehen, daß der Hülsenansatz 38 ein abgeschliffenes konisches Ende 50 aufweist, das mit einer konischen Gegenfläche des Hülsenansatzes 17 im Bereich des Verzahnungsauslaufs zusammenwirkt. An den Hülsenansatz 38 schließt sich ein den Kupplungskorb 34 radial erweiterndes Bodenteil 40 an, in dem ein Lager 42 zum drehbaren Lagern des Kupplungskorbs 34 auf der Kupplungsnabe 36 sowie eine Drehdichtung 43 aufgenommen sind. An das Bodenteil 40 ist ein Mantelteil 44 angeschlossen, das sich axial bis zum Lagerträger 19 erstreckt und in dem das Lamellenpaket der Hauptkupplung 26, der Rampenmechanismus 25, die Pilotkupplung 24 und die Magnetspule 23 aufgenommen sind. Der Kupplungskorb 34 erstreckt sich in axialer Richtung vom Differentialträger 5 bzw. dem Gehäuse 6, in dem der Differentialträger gelagert ist, bis zum Lagerträger 19. Nach außen hin ist der Kupplungskorb 34 geschlossen und bildet insofern eine Art Gehäuse um die Zwischenwelle 12.

Die zwischen der Kupplungsnabe 36 und dem Kupplungskorb 34 gebildete Ringkammer 52 ist mittels des Deckelelements 53 dichtend verschlossen. Es ist ersichtlich, daß die Pilotkupplung 24, der Rampenmechanismus 25 und die Hauptkupplung 26 innerhalb der Ringkammer 52 und die Magnetspule 23 außerhalb der Ringkammer 52 angeordnet sind. Zur Abdichtung ist zwischen einer Außenumfangsfläche des Deckelelements 53 und einer Innenfläche des Mantelabschnitts 44 eine Ringdichtung in Form eines O-Rings 54 vorgesehen. Radial innen sitzt eine Drehdichtung 55 in Form einer Vierlippendichtung in einer Ringnut des Deckelelements 53 ein, die in dichtendem Anlagekontakt mit einer Außenfläche der Kupplungsnabe 36 ist. Axial benachbart zur Drehdichtung 55 ist eine Lagerbuchse 74 vorgesehen, die in einer Ausnehmung des Deckelelements 53 einsitzt und zur radialen Abstützung bzw. Lagerung der Kupplungnabe 36 dient. Das Deckelelement 53 hat ein Außengewinde 56, mit dem es in ein Innengewinde des Kupplungskorbs 34 eingedreht ist, so daß beide gemeinsam eine Baueinheit bilden. Das Deckelelement 53 ist - im Längshalbschnitt betrachtet - C-förmig gestaltet und bildet einen in Richtung zum Lagerträger 19 offenen Ringraum, in den die Magnetspule 23 eintaucht. Die Magnetspule 23 ist auf einem Hülsenansatz eines Halteelements 27 befestigt, das wiederum mit dem Lagerträger 19 fest verbunden ist. Hierfür hat das Halteelement 27 einen dem ersten Hülsenansatz axial entgegengesetzt gerichteten zweiten Hülsenansatz 28, mit dem er in eine entsprechende Bohrung 29 des Lagerträgers 19 eingepreßt ist. Das Halteelement 27 und der Lagerträger 19 haben jeweils eine axiale Bohrung, die miteinander fluchten und als Kabeldurchführung 30 für ein die Magnetspule 23 ansteuerndes Stromkabel dienen. Dabei erfüllt die Kabeldurchführung 30 gleichzeitig die Funktion einer Drehsicherung des Halteelements 27 gegenüber dem Lagerträger 19. Der Lagerträger 19 hat über den Umfang verteilt zumindest einen Haltearm bzw. Lasche 32 zum Verbinden mit einem Motorbauteil 33.

Differentialseitig ist der Kupplungskorbs 34 mit seinem Hülsenansatz 38 mittels einer berührenden Drehdichtung 48, die in Form eines Radialwellendichtrings gestaltet ist, und einer hierzu axial benachbarten berührungslosen Ringdichtung 51 abgedichtet, die auf dem Hülsenansatz 38 befestigt ist und den zwischen dem Differentialgehäuse und dem Hülsenansatz 38 gebildeten Ringraum überdeckt. Gelenkseitig ist der Kupplungskorb 34 mittels einer berührungslosen Drehdichtung 49 zum Trägerelement 19 hin abgedichtet, die im Halblängsschnitt betrachtet Z-förmig gestaltet ist und auf dem Mantelteil 44 befestigt ist und mit einem axialen Ringabschnitt eine zylindrische Außenfläche des Lagerträgers 19 axial übergreift. Zur Lagerung des Kupplungskorbs 34 gegenüber dem Lagerträger 19 ist ein Wälzlager 58 vorgesehen, das mit seinem Lagerinnenring auf einer außenzylindrischen Sitzfläche des Lagerträgers 19 aufsitzt und mit seinem Lageraußenring in einer innenzylindrischen Bohrung des freien Endes des Kupplungskorbs 34 einsitzt. Die Lagerung ist so ausgelegt, daß radial innen und außen minimale Radialspalte zwischen dem Deckelelement 53 und dem Halteelement 27 gebildet sind. Das Wälzlager 58 ist mit seinem Lagerinnenring gegen eine Anlauffläche des Lagerträgers 19 und mit seinem Lageraußenring gegen eine Radialfläche des Halteelements 27 axial abgestützt. Der Mantelabschnitt 44 des Kupplungskorbs 34 taucht in einen axial offenen Ringraum des Lagerträgers 19 ein. Das Wälzlager 58 ist mittels Dichtscheiben beidseitig abgedichtet, so daß es neben der Drehdichtung 49 weitere Dichtungsfunktion wahrnimmt.

Die Kupplungsnabe 36 ist in Form einer Hülse gestaltet, die auf die Zwischenwelle 12 aufgeschoben und mit dieser über eine Längsverzahnung 45 drehfest verbunden ist. Als Axialansicherungsmittel dienen einerseits der Verzahnungsauslauf der Längsverzahnung 45 und andererseits eine Schulter 47 der Kupplungsnabe, gegen die der Lagerinnenring des Lagers 42 abgestützt ist. Der zwischen der Zwischenwelle 12 und der Kupplungsnabe 36 gebildete Radialspalt ist mittels eines Dichtrings 46 abgedichtet, der in einer inneren Ringnut der Kupplungsnabe 36 einsitzt. So wird verhindert, daß Getriebeöl aus dem Differential 4 entweicht.

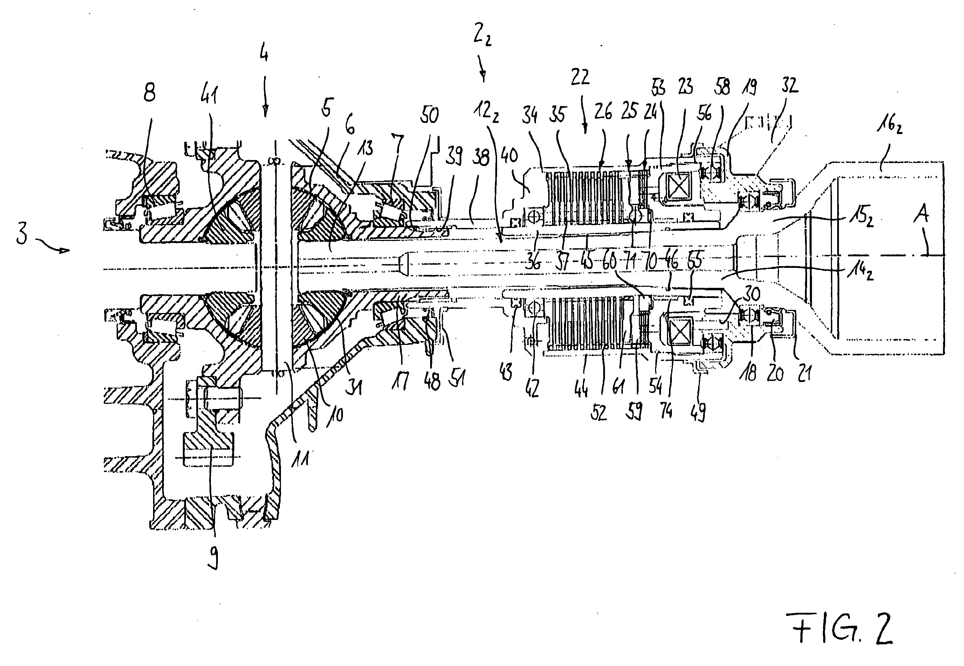

Figur 2 zeigt eine erfindungsgemäße Antriebsanordnung in einer zweiten Ausführungsform, die derjenigen aus Figur 1 weitestgehend entspricht. Insofern wird hinsichtlich der Gemeinsamkeiten auf obige Beschreibung Bezug genommen, wobei gleiche Bauteile mit gleichen und abgewandelte Bauteile mit Bezugszeichen mit um zwei tiefergestellten Indizes versehen sind. Der einzige Unterschied zur Ausführungsform nach Figur 1 besteht darin, daß die Zwischenwelle 12₂ der vorliegenden Antriebsanordnung mit dem Gelenkaußenteil 16₂ des anzuschließenden Gleichlaufdrehgelenks einteilig hergestellt ist. An ihrem gelenkseitigen Ende ist die Zwischenwelle 12₂ mittels des Wälzlagers 18 gegenüber dem Lagerträger 19₂ drehbar gelagert.

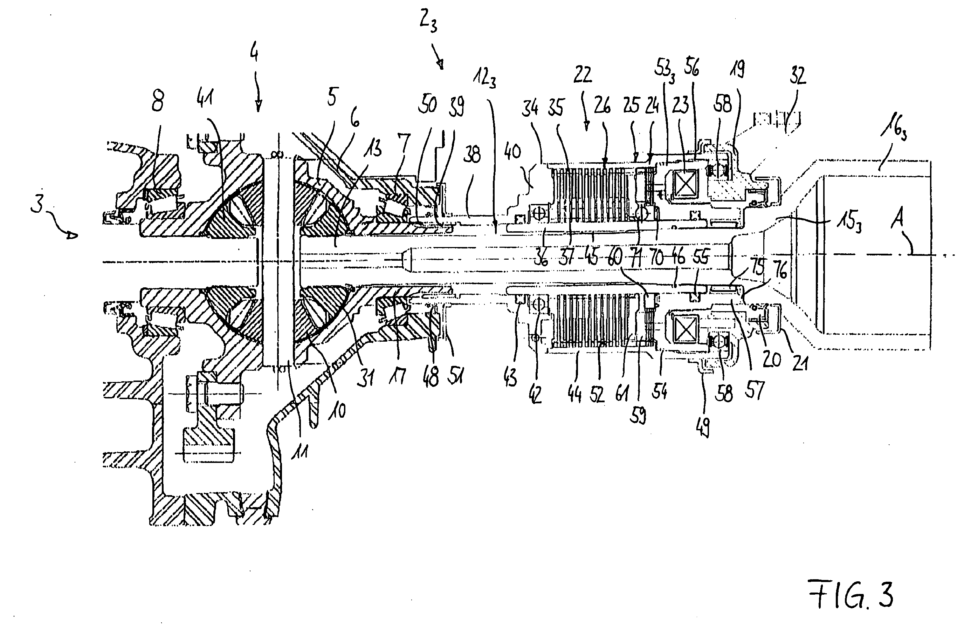

Figur 3 zeigt eine erfindungsgemäße Antriebsanordnung in einer dritten Ausführungsform, die derjenigen aus Figur 2 weitestgehend entspricht. Insofern wird hinsichtlich der Gemeinsamkeiten auf obige Beschreibung Bezug genommen, wobei gleiche Bauteile mit gleichen und abgewandelte Bauteile mit Bezugszeichen mit um drei tiefergestellten Indizes versehen sind. Die vorliegende Antriebsanordnung unterscheidet sich gegenüber der Ausführungsform nach Figur 2 dadurch, daß die Zwischenwelle 12₃ mit ihrem gelenkseitigen Ende nicht unmittelbar im Lagerträger gelagert ist, sondern in einem Hülsenansatz 57 des Deckelelements 53₃ drehbar abgestützt ist. Als Lagermittel ist hier ein Nadellager 75 vorgesehen, das auf einer zylindrischen Außenfläche der Zwischenwelle 12 sitzt. Es können aber auch andere Lagermittel, beispielsweise ein Polygonlager zum Einsatz kommen. Zum Abstützen der Zwischenwelle in axialer Richtung ist ein Axiallager 76 vorgesehen, das zwischen einer radialen Schulter der Zwischenwelle 12 und der radialen Stirnfläche des Hülsenansatzes 57 einsitzt. Das Deckelelement 53₃ ist mit dem Kupplungskorb 34 fest verbunden, der seinerseits über das Wälzlager 58 auf einem axialen Vorsprung des Lagerträgers 19 drehbar gelagert ist. Insofern ist die Zwischenwelle 12₃ bei der vorliegenden Ausführungsform über das Deckelteil 53₃ und den Kupplungskorb 34 mittelbar gegenüber dem Lagerträger 19 radial abgestützt. Ein weiterer Unterschied zur obigen Ausführungsform besteht darin, daß vorliegend keine Lagerbuchse zwischen der Kupplungsnabe 36 und dem Deckelelement 53₃ vorgesehen ist.

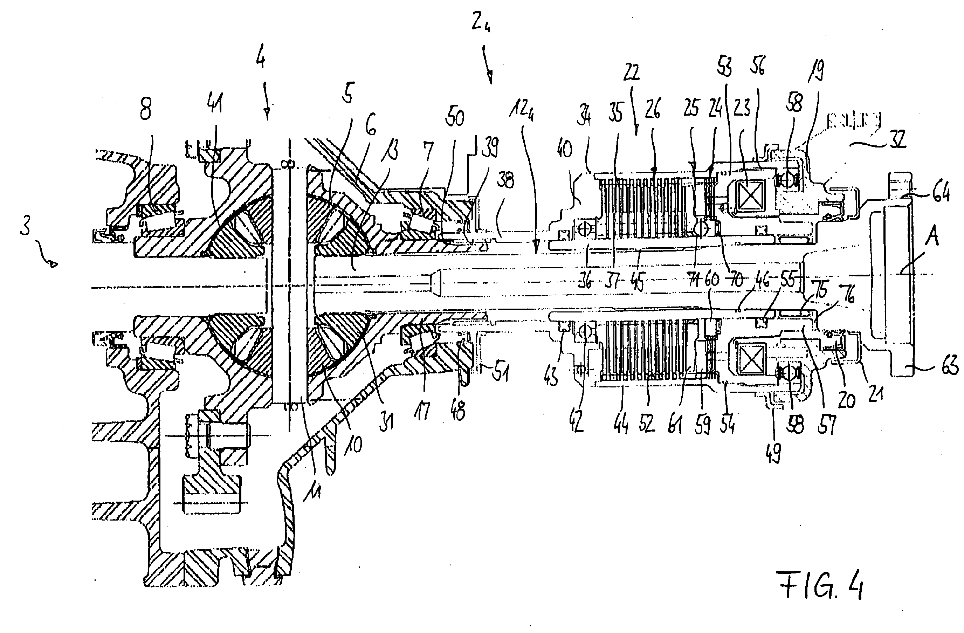

Figur 4 zeigt eine erfindungsgemäße Antriebsanordnung in einer vierten Ausführungsform, die derjenigen aus Figur 3 weitestgehend entspricht. Insofern wird hinsichtlich der Gemeinsamkeiten auf obige Beschreibung Bezug genommen, wobei gleiche Bauteile mit gleichen und abgewandelte Bauteile mit Bezugszeichen mit um vier tiefergestellten Indizes versehen sind. Der einzige Unterschied zur Ausführungsform nach Figur 3 besteht darin, daß die Zwischenwelle 12₄ an ihrem äußeren Ende einteilig mit einem Wellenflansch 63 gestaltet ist. An den Wellenflansch 63 ist ein Gelenkaußenteil eines hier nicht dargestellten Gleichlaufdrehgelenks drehfest anzuschließen. Dies geschieht in herkömmlicher Weise mittels Schrauben, die in umfangsverteilte Bohrungen 64 des Wellenflanschs 63 eingedreht werden. Das Gleichlaufdrehgelenk ist bei dieser Ausführungsform als Scheibengelenk gestaltet, beispielsweise in Form eines VL-Verschiebegelenks. Das Gleichlaufdrehgelenk ist Teil der Seitenwelle, die zur Drehmomentübertragung auf das zugehörige Vorderrad dient.

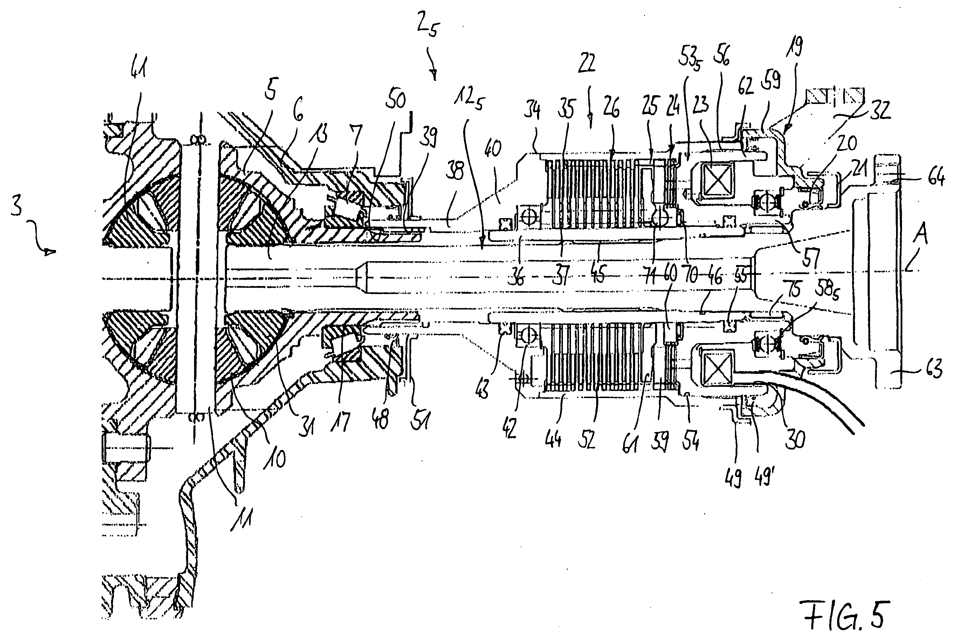

Figur 5 zeigt eine erfindungsgemäße Antriebsanordnung in einer fünften Ausführungsform, die derjenigen aus Figur 4 weitestgehend entspricht. Insofern wird hinsichtlich der Gemeinsamkeiten auf obige Beschreibung Bezug genommen, wobei gleiche Bauteile mit gleichen und abgewandelte Bauteile mit Bezugszeichen mit um fünf tiefergestellten Indizes versehen sind. Die vorliegende Antriebsanordnung unterscheidet sich gegenüber der Ausführungsform nach Figur 4 dadurch, daß anstelle des Kupplungskorbs vorliegend das Deckelelement 53₅ gegenüber dem Lagerträger 19₅ drehbar gelagert ist, und zwar über das Halteelement 27₅. Hierfür sitzt das Wälzlager 58₅ mit seinem Lagerinnenring auf der zylindrischer Außenfläche des Hülsenansatzes 57, während der Lageraußenring in einer innenzylindrischen Bohrung des Halteelements 27₅ einsitzt. Das Halteelement 27₅ ist wiederum mit dem Lagerträger 19₅ fest verbunden ist. Bei der vorliegenden Ausführungsform können folglich Lagermittel mit kleinerem Durchmesser zum Einsatz kommen, was Gewichtsvorteile mit sich bringt. Außerdem liegen die zwischen der Zwischenwelle 12₅ und dem Deckelelement 53₅ angeordneten inneren Lagermittel 75 einerseits und die zwischen dem Deckelelement 53₅ und dem Halteelement 27₅ angeordneten äußeren Lagermittel 58₅ in einer Ebene, so daß bei Betrieb auftretende Biegemomente gut abgestützt werden können. Es ist weiter ersichtlich, daß zwischen dem Deckelelement 53₅ und der Kupplungsnabe 36 eine Lagerbuchse 74 eingesetzt ist. Ein weiterer Unterschied zur obigen Ausführungsform liegt in der Abdichtung zwischen der Kupplungseinheit und dem Lagerträger 19₅. Es ist ersichtlich, daß vorliegend zwei Dichtmittel 49, 49' zwischen der Kupplungseinheit und dem Lagerträger 19₅ vorgesehen sind. Zusätzlich zu den ersten Dichtmitteln 49, die an dem freien Ende des Mantelabschnitts 44 befestigt sind und den Hülsenabschnitt 59 des Lagerträgers 19 axial überdecken, sind zweite Dichtmittel 49' vorgesehen, die in Form eines Radialwellendichtrings gestaltet sind. Der Radialwellendichtring sitzt in dem Hülsenabschnitt 59 des Lagerträgers 19₅ ein und ist mit einer außenzylindrischen Fläche des Deckelelements 53₅ in dichtendem Anlagekontakt. Das Deckelelement 53₅ hat einen Hülsenansatz 62, der axial über das freie Ende des Mantelabschnitts 44 hinausragt und in den innerhalb des Hülsenabschnitts 59 gebildeten Ringraum des Lagerträgers 19₅ eintaucht. Weiter ist die Kabeldurchführung 30 zur Betätigung der Magnetspule ersichtlich.

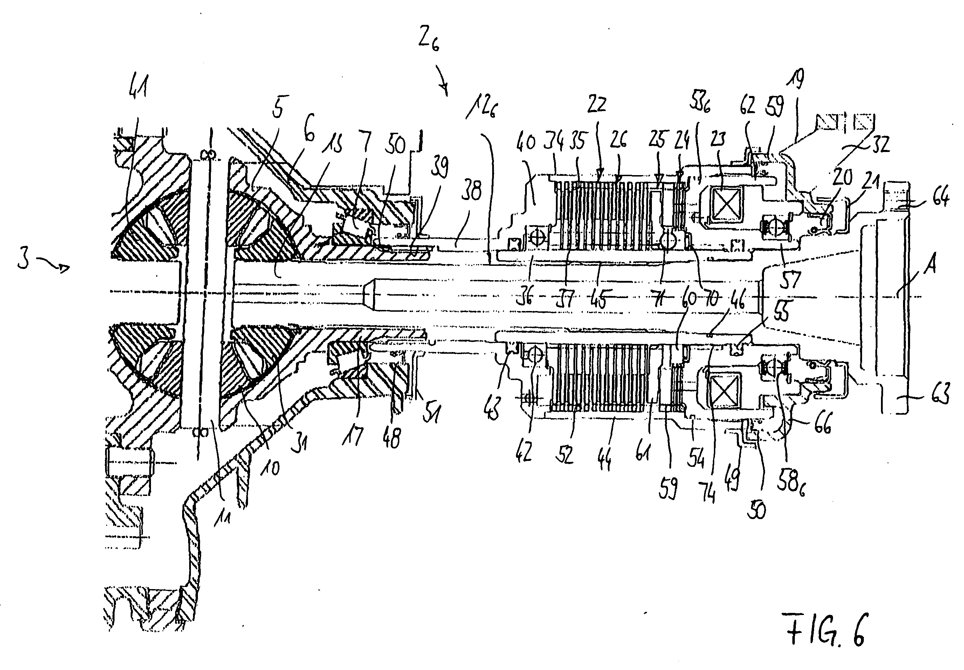

Figur 6 zeigt eine erfindungsgemäße Antriebsanordnung in einer sechsten Ausführungsform, die derjenigen aus Figur 5 weitestgehend entspricht. Insofern wird hinsichtlich der Gemeinsamkeiten auf obige Beschreibung Bezug genommen, wobei gleiche Bauteile mit gleichen und abgewandelte Bauteile mit Bezugszeichen mit um sechs tiefergestellten Indizes versehen sind. Der einzige Unterschied zur obigen Ausführungsform besteht darin, daß vorliegend keine zusätzlichen Lagermittel zwischen der Zwischenwelle 12₆ und dem Deckelelement 53₆ vorgesehen sind. Die radiale Abstützung der Zwischenwelle 12₆ erfolgt hier über die Kupplungsnabe 36, die mittels der Lagerbuchse 74 relativ zum Deckelelement 53₆ drehbar gelagert ist.

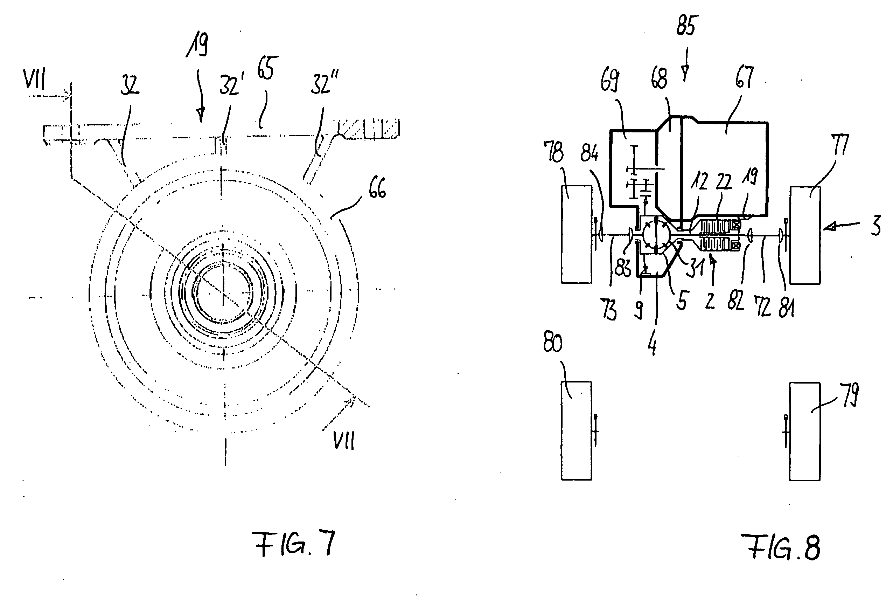

Figur 7 zeigt eine Axialansicht der Antriebsanordnung nach einer der Figuren 1 bis 6, wobei die in den Figuren 1 bis 6 dargestellten Längsschnitte der Schnittlinie VII-VII aus Figur 7 entsprechen. Es ist insbesondere der Lagerträger 19 ersichtlich, der eine Anschlußplatte 65 zum Anschrauben an ein hier nicht dargestelltes Motorbauteil und drei Haltearme 32 aufweist. Die Haltearme 32 tragen wiederum den Ringkörper 66, gegenüber dem die Kupplungseinheit 22 drehbar gelagert und abgedichtet ist.

Figur 8 zeigt schematisch den Antriebsstrang eines vorderachsgetriebenen Kraftfahrzeugs 85 mit quer zur Fahrzeugsachse eingebautem Motor 67. Es sind die Vorderachse 3 mit rechtem und linkem Vorderrad 77, 78 sowie die Hinterräder 79, 80 dargestellt. Neben dem Motor 67 sind die Kupplung 68 und das Schaltgetriebe 69 ersichtlich, über das Drehmoment in das Achsdifferential 4 eingeleitet wird. Hierfür ist das Ringrad 9 vorgesehen, das mit dem Differentialträger 5 fest verbunden ist und von einem Antriebsritzel angetrieben wird. Vom Achsdifferential 4 wird das eingeleitete Drehmoment auf die beiden Seitenwellenräder aufgeteilt. Es ist ersichtlich, daß das Achsdifferential 4 in Bezug auf die Fahrzeuglängsachse außermittig angeordnet ist, so daß zur Drehmomentübertragung auf die untereinander gleich langen Seitenwellen 72, 73 unterschiedlich lange Abstände überbrückt werden müssen. Während die linke Seitenwelle 73 unmittelbar an das Seitenwellenrad des Achsdifferentials anschließt, ist auf der rechten Seite eine Antriebsanordnung 2 nach einer der obigen Ausführungsformen mit einer Zwischenwelle 12 und einer Kupplungseinheit 22 zwischengeschaltet. Dabei dient die Zwischenwelle 12 der Antriebsanordnung 2 zur Drehmomentübertragung vom rechten Seitenwellenrad 31 auf die zugehörige Seitenwelle 72. Jede der beiden Seitenwellen 72, 73 umfaßt zwei Gleichlaufdrehgelenke 81, 82, 83, 84, von denen üblicherweise die innenliegenden in Form von Verschiebegelenken und die äußeren in Form von Festgelenken gestaltet sind. Mit der koaxial zur Zwischenwelle 12 angeordneten Kupplungseinheit 22 kann eine Ausgleichsbewegung zwischen dem beiden Seitenwellenrädern des Achsdifferentials je nach Bedarf aktiv gesperrt werden, so daß die Fahrdynamik des Kraftfahrzeugs verbessert wird.

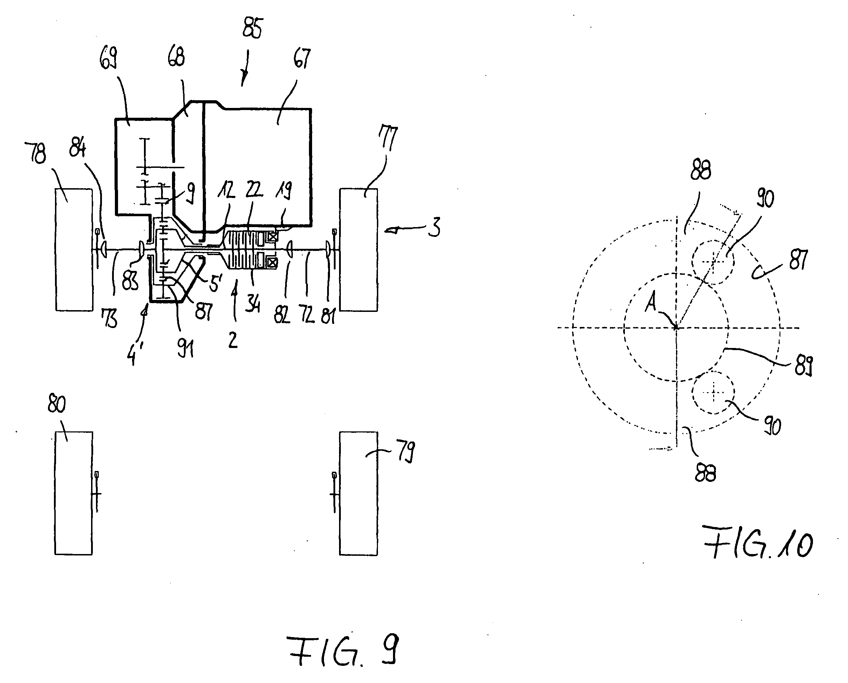

Die Figuren 9 und 10, welche im folgenden gemeinsam beschrieben werden, zeigen schematisch einen Antriebsstrang in einer zweiten Ausführungsform. Diese entspricht weitestgehend der Ausführungsform gemäß Figur 8, auf deren Beschreibung hinsichtlich der Gemeinsamkeiten insofern Bezug genommen wird. Gleiche Bauteile sind mit gleichen Bezugszeichen, unterschiedliche Bauteile mit Bezugszeichen mit um eins gestrichenen Indizes versehen, Der einzige Unterschied gegenüber der Ausführungsform nach Figur 8 besteht darin, daß vorliegend anstelle eines Kegelraddifferentials ein Doppelplanefiendifferential 4' als Achsdifferential vorgesehen ist. Dieses umfaßt einen Korb 91, der von dem Ringrad 9 um die Drehachse A drehend angetrieben wird, ein mit dem Korb 91 drehfest verbundenes Hohlrad 87, das mit ersten Planetenrädern 88 in Verzahnungseingriff ist, ein auf der Drehachse A drehbar gelagertes Sonnenrad 89, das mit zweiten Planetenrädern 90 in Verzahnungseingriff ist. Jeweils ein erstes Planetenrad 88 und ein zweites Planetenrad 90 kämmen miteinander und bilden gemeinsam ein Paar, woher die Bezeichnung Doppelplanetendifferential herrührt. Die Paare von Planetenrädern 88, 90 sind in dem Differentialträger 5' drehbar gelagert, der einerseits mit dem Kupplungskorb 34 drehfest verbunden ist und andererseits mit der Seitenwelle 73. Der Differentialträger 5', der bei Planetendifferentialen auch als Steg bezeichnet wird, bildet somit neben dem Sonnenrad 89 einen zweiten Ausgang des Achsdifferentials. Das Sonnenrad 89 ist mit der Zwischenwelle 12 drehfest verbunden, welche ihrerseits mit der Kupplungsnabe 36 drehfest verbunden ist. Somit kann durch Schließen der Kupplungseinheit 22 die Zwischenwelle 12 an den Differentialträger 5' angekoppelt werden, was eine Verminderung der Drehzahldifferenz zwischen den beiden Seitenwellen 72, 73 bewirkt.

Insgesamt haben die erfindungsgemäßen Antriebsanordnungen den Vorteil eines kompakten und einfachen Aufbaus. Zur Integration in die Vorderachse ist lediglich eine Anbindung des Lagerträgers 19 an ein Anschlußteil des Motors bzw. Getriebes 67 erforderlich. Zusätzliche Modifikationen des Differentialgehäuses oder anderer Bauteile sind nicht vonnöten, was sich günstig auf die Kosten auswirkt.

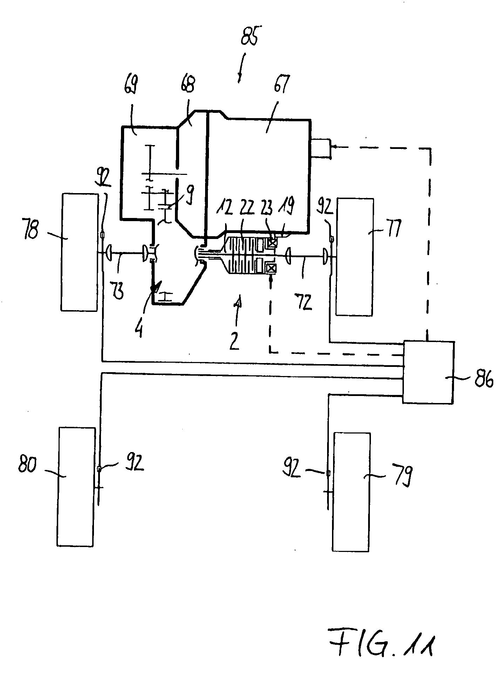

Aus Figur 11 geht ein weiterer Aspekt der Erfindung hervor, der die elektronische Integration der Kupplungseinheit 22 betrifft. Es ist der Antriebsstrang des Kraftfahrzeugs schematisch dargestellt, der denjenigen aus den Figuren 8 bzw. 9 entspricht Es wird hinsichtlich Aufbau und Funktionsweise somit auf obige Beschreibung verwiesen, wobei gleiche Bauteile mit gleichen Bezugszeichen versehen sind. Das Achsdifferential 4 kann beliebig gestaltet sein, beispielsweise als Kegelraddifferential oder Doppelplanetendifferential. Es ist eine Regeleinheit 86 zur Regelung der Fahrdynamik des Kraftfahrzeugs ersichtlich, die auch 'Electronic Control Unit' (ECU) bezeichnet wird. An die Regeleinheit 86 werden mittels Sensoren 92 an den Rädern 77, 78, 79, 80 erfaßte Daten weitergeleitet, was mittels durchgezogener Linien dargestellt ist. Die sensorisch erfaßten Daten können beispielsweise Drehzahlen oder ABS-Signale der Räder sein. Anhand dieser Daten werden Steuersignale generiert, welche beispielsweise durch Eingriff in die Bremsen das Gierverhalten des Kraftfahrzeugs beeinflussen und somit eine erhöhte Fahrstabilität gewährleisten. Dabei wird dieselbe elektronische Regeleinheit 86, die zur Regelung der Fahrdynamik dient, auch zur Steuerung der Kupplungseinheit 22 verwendet. Die Ansteuerung der Kupplungseinheit 22 und des Motors 67 ist mit gestrichelten Linien dargestellt. Es ergibt sich neben der einfachen mechanischen Integration der Kupplungseinheit 22 in den Antriebsstrang des Kraftfahrzeugs auch eine einfache elektronische Integration, da die Steuerung der Kupplungseinheit 22 von einer ohnehin vorhandenen Regeleinheit 86 übernommen wird. Die Regeleinheit 86 kann als weitere Steuerfunktionen auch Eingriffe in das Motormanagement vornehmen, um beispielsweise das zur Übertragung auf den Antriebsstrang erzeugte Drehmoment zu variieren. Andere Steuerfunktionen können Lenkungs- oder Getriebemanagement oder Traktionskontrolle der Räder sein. Im Zusammenhang mit der elektronischen Integration ist die Verwendung der Kupplungseinheit 22 mit Pilotkupplung 24 und Hauptkupplung 26 besonders günstig, da zur Ansteuerung lediglich geringe Stromstärken von weniger als fünf Ampere erforderlich sind.

### Bezugszeichenliste

- 2: Antriebsanordnung
- 3: Antriebsachse
- 4: Achsdifferential
- 5: Differentialträger
- 6: Gehäuse
- 7: Wälzlager
- 8: Wälzlager
- 9: Ringrad
- 10: Differential rad
- 11: Zapfen
- 12: Zwischenwelle
- 13: erstes Ende
- 14: zweites Ende
- 15: Nabe
- 16: Gelenkaußenteil
- 17: Hülsenansatz
- 18: Lager
- 19: Lagerträger
- 20: Drehdichtung
- 21: Dichtring
- 22: Kupplungseinheit
- 23: Magnetspule
- 24: Pilotkupplung
- 25: Rampenmechanismus
- 26: Hauptkupplung
- 27: Halteelement
- 28: Hülsenansatz
- 22: Bohrung
- 30: Kabeldurchführung
- 31: Ausgangsrad
- 32: Lasche
- 33: Motorbauteil
- 34: Kupplungskorb
- 35: Außenlamelle
- 36: Kupplungsnabe
- 37: Innenlamelle
- 38: Hülsenansatz
- 39: Längsverzahnung
- 40: Bodenteil
- 41: Ausgangsrad
- 42: Lager
- 43: Drehdichtung
- 44: Mantelteil
- 45: Längsverzahnung
- 46: Dichtring
- 47: Schulter
- 48: erste Drehdichtung
- 49: zweite Drehdichtung
- 50: konisches Ende
- 51: Ringdichtung
- 52: Ringkammer
- 53: Deckelelement
- 54: Ringdichtung
- 55: Drehdichtung
- 56: Außengewinde
- 57: Hülsenabschnitt
- 58: Wälzlager
- 59: Ankerplatte
- 60: Stellscheibe
- 61: Druckscheibe
- 62: Hülsenansatz
- 63: Wellenflansch
- 64: Bohrung
- 65: Anschlußplatte
- 66: Ringkörper
- 67: Motor
- 68: Kupplung
- 69: Schaltgetriebe
- 70: Axiallager
- 71: Kugel
- 72: Seitenwelle
- 73: Seitenwelle
- 74: Lagerbuchse
- 75: Lagermittel
- 76: Axiallager
- 77: Rad
- 78: Rad
- 79: Rad
- 80: Rad
- 81: Gleichlaufdrehgelenk
- 82: Gleichlaufdrehgelenk
- 83: Gleichlaufdrehgelenk
- 84: Gleichlaufdrehgelenk
- 85: Kraftfahrzeug
- 86: Regeleinheit
- 87: Hohlrad
- 88: erstes Planetenrad
- 89: Sonnenrad
- 90: zweites Planetenrad
- 91: Differentialkorb
- 92: Sensor

- A: Drehachse

## Patentansprüche

1. Antriebsanordnung zum Einsatz im Achsantrieb eines Kraftfahrzeugs zwischen einem Achsdifferential und einer Seitenwelle, umfassend
eine um eine Drehachse (A) drehbar gelagerte Zwischenwelle (12), deren erstes Ende mit einem Ausgangsrad (31) des Achsdifferentials (4) drehfest verbunden ist und deren zweites Ende zumindest mittelbar mit der Seitenwelle (72) drehfest verbunden ist;
eine koaxial zur Zwischenwelle (12) angeordnete steuerbare Kupplungseinheit (22), die einen mit einem Differentialträger (5) des Achsdifferentials (4) drehfest verbundenen und gegenüber einem Lagerträger (19) um die Drehachse (A) drehbar gelagerten Kupplungskorb (34) mit Außenlamellen (35) und eine mit der Zwischenwelle (12) drehfest verbundene Kupplungsnabe (36) mit Innenlamellen (37) umfaßt, wobei die Außenlamellen (35) und die Innenlamellen (37) axial abwechselnd angeordnet sind und gemeinsam ein Lamellenpaket bilden;
der Kupplungskorb (34) erstreckt sich in axialer Richtung vom Differentialträger (5) bis zum Lagerträger (19) und ist mit seinem differentialseitigen Ende mittels einer ersten Drehdichtung (48) gegenüber einem Gehäuse (6) des Achsdifferentials (4) abgedichtet und mit seinem trägerseitigen Ende mittels einer zweiten Drehdichtung (49) gegenüber dem Lagerträger (19), wobei der Kupplungskorb (34) ein geschlossenes Gehäuse bildet,
**dadurch gekennzeichnet,**
**daß** die Kupplungseinheit (22) eine Magnetspule (23), eine von der Magnetspule (23) ansteuerbare Pilotkupplung (24), einen von der Pilotkupplung (24) betätigbaren Rampenmechanismus (25) und eine von dem Rampenmechanismus betätigbare Hauptkupplung (26) aufweist, die den Kupplungskorb (34) und die Kupplungsnabe (36) umfaßt, und
**daß** eine elektronische Regeleinheit (86) mit einem elektronischen Stabilitätsprogramm (ESP) vorgesehen ist, mit der - in Abhängigkeit von zumindest einem Fahrzeugparameter - der Sperrgrad der Kupplungseinheit (22) sowie die Fahrdynamik des Kraftfahrzeugs (85) regelbar ist.

2. Antriebsanordnung nach Anspruch 1,
**dadurch gekennzeichnet,**
**daß** der Kupplungskorb (34) eine mit dem Differentialträger (5) drehfest verbundene Anschlußhülse (38), ein hieran anschließendes Bodenteil (40) und ein hieran anschließendes Mantelteil (44) aufweist, dessen freies Ende gegenüber dem Lagerträger (19) abgedichtet ist.

3. Antriebsanordnung nach Anspruch 2,
**dadurch gekennzeichnet,**
**daß** die Anschlußhülse (38) mit einem Hülsenansatz (17) des Differentialträgers (5) mittels einer Steckverbindung drehfest verbunden ist.

4. Antriebsanordnung nach einem der Ansprüche 1 bis 3,
**dadurch gekennzeichnet,**
**daß** ein Deckelelement (53) zum Verschließen des Kupplungskorbs (34) vorgesehen ist, das gegenüber dem Lagerträger (19) mittels eines Lagers (58) drehbar gelagert ist.

5. Antriebsanordnung nach Anspruch 4,
**dadurch gekennzeichnet,**
**daß** die Zwischenwelle (12) an ihrem vom Achsdifferential (4) entfernten Ende mittels eines Lagers (18) gegenüber dem Lagerträger (19) drehbar gelagert ist.

6. Antriebsanordnung nach Anspruch 4 oder 5,
**dadurch gekennzeichnet,**
**daß** der Kupplungskorb (34), das Deckelelement (53) und die Kupplungsnabe (36) eine nach außen abgedichteten Ringkammer einschließen, wobei die Pilotkupplung (24), der Rampenmechanismus (25) und die Hauptkupplung (26) innerhalb der Ringkammer und die Magnetspule (23) außerhalb der Ringkammer angeordnet sind.

7. Antriebsanordnung nach einem der Ansprüche 5 oder 6,
**dadurch gekennzeichnet,**
**daß** das Deckelelement (53) - im Längshalbschnitt betrachtet - C-förmig gestaltet ist und einen zu einer axialen Seite offenen Ringraum bildet, in dem die Magnetspule (23) angeordnet ist.

8. Antriebsanordnung nach Anspruch 7,
**dadurch gekennzeichnet,**
**daß** die Magnetspule (23) an einem Halteelement (27) befestigt ist, das den Ringraum axial begrenzt und mit dem Lagerträger (19) fest verbunden ist.

9. Antriebsanordnung nach Anspruch 8,
**dadurch gekennzeichnet,**
**daß** das Halteelement (27) aus ferromagnetischem Material hergestellt ist.

10. Antriebsanordnung nach Anspruch 8 oder 9,
**dadurch gekennzeichnet,**
**daß** das Deckelelement (53) einen inneren Hülsenabschnitt (57) aufweist, der mittels eines Lagers (58) gegenüber dem Halteelement (27) um die Drehachse (A) drehbar gelagert ist, wobei zwischen dem Deckelelement (53) und dem Halteelement (27) Radialspalte gebildet sind.

11. Antriebsanordnung nach einem der Ansprüche 1 bis 10,
**dadurch gekennzeichnet,**
**daß** die Kupplungsnabe (36) in Form einer Hülse gestaltet ist, die auf der Zwischenwelle (12) mittels einer Längsverzahnung (45) drehfest gehalten ist.

12. Antriebsanordnung nach einem der Ansprüche 2 bis 11,
**dadurch gekennzeichnet,**
**daß** der Kupplungskorb (34) mittels eines im Bodenteil (40) aufgenommenen Lagers (42) auf der Kupplungsnabe (36) drehbar gelagert und gegenüber dieser mittels einer Drehdichtung (43) abgedichtet ist.

13. Antriebsanordnung nach einem der Ansprüche 1 bis 12,
**dadurch gekennzeichnet,**
**daß** das Deckelelement (53) radial innen mittels einer Drehdichtung (55) gegenüber der Kupplungsnabe (36) und radial außen mittels eines Dichtrings (54) gegenüber dem Mantelteil (44) abgedichtet ist.

14. Antriebsanordnung nach einem der Ansprüche 1 bis 13,
**dadurch gekennzeichnet,**
**daß** der Lagerträger (19) zumindest einen Haltearm (32) zum Verbinden mit einem Motor- oder Getriebebauteil (67) des Kraftfahrzeugs aufweist.

15. Antriebsanordnung nach einem der Ansprüche 1 bis 14,
**dadurch gekennzeichnet,**
**daß** die elektronische Regeleinheit (86) zumindest eine Steuerfunktion eines Motormanagementsystems und/oder eines Getriebemanagementsystems und/oder eines Anti-Blockiersystem der Bremsen und/oder eines Traktionskontrollsystems der Räder (77, 78, 79, 80) des Kraftfahrzeugs wahrnimmt.

16. Antriebsanordnung nach einem der Ansprüche 1 bis 15,
**dadurch gekennzeichnet,**
**daß** die elektronische Regeleinheit (86) die Kupplungseinheit (22) mit einer Stromstärke von weniger als fünf Ampere ansteuert.

## Claims

1. A drive assembly for being used in the axle drive of a motor vehicle between an axle differential and a sideshaft, comprising
an intermediate shaft (12) which is supported so as to be rotatable around an axis of rotation (A), whose first end is connected to an output gear (31) of the axle differential (4) in a rotationally fixed way and whose second end is connected at least indirectly to the sideshaft (72) in a rotationally fixed way;
a controllable coupling unit (22) which is arranged coaxially relative to the intermediate shaft (12) and which comprises a coupling cage (34) with outer plates (35) and a coupling hub (36) with inner plates (37), which coupling cage (34) is connected in a rotationally fixed way to a differential carrier (5) of the axle differential (4), and which coupling cage (34) is rotationally supported around the axis of rotation (A) relative to a bearing support (19), and which coupling hub (36) is connected in a rotationally fixed way to the intermediate shaft (12), wherein the outer plates (35) and the inner plates (37) are arranged so as to axially alternate and jointly form a plate package;
the coupling cage (34) extends in the axial direction from the differential carrier (5) to the bearing support (19) and, at its end facing the differential (4), it is sealed by means of a first rotary seal (48) relative to a housing (6) of the axle differential (4) and, at its end facing the bearing support (19), it is sealed by means of a second rotary seal (49) relative to the bearing support (19), wherein the coupling carrier (34) forms a closed housing,
**characterised in**
**that** the coupling unit (22) comprises a magnet coil (23), a pilot coupling (24) which can be controlled by the magnet coil (23), a ramp mechanism (25) which can be actuated by the pilot coupling (24), and a main coupling (26) which can be actuated by the ramp mechanism (25) and which comprises the coupling carrier (34) and the coupling hub (36), and
**that** the electronic control unit (86) is provided with an electronic stability program (ESP) by means of which - as a function of at least one vehicle parameter - it is possible to control the degree of locking of the coupling unit (22) as well as the driving dynamics of the motor vehicle (85).

2. A drive assembly according to claim 1
**characterised in**
**that** the coupling cage (34) comprises an attaching sleeve (38) connected to the differential carrier (5) in a rotationally fixed way, a bottom part (40) which adjoins said attaching sleeve (38), and a tubular part (44) which adjoins said bottom part (40) and whose free end is sealed relative to the bearing support (19).

3. A drive assembly according to claim 2,
**characterised in**
**that** the attaching sleeve (38) is connected in a rotationally fixed way to a sleeve projection (17) of the differential carrier (5) by means of a plug-in connection.

4. A drive assembly according to any one of claims 1 to 3,
**characterised in**
**that**, for closing the coupling cage (34), there is provided a cover element (53) which, by means of a bearing (58), is rotatably supported relative to the bearing support (19).

5. A drive assembly according to claim 4,
**characterised in**
**that**, at its end remote from the axle differential (4), the intermediate shaft (12) is rotatably supported relative to the bearing support (19).

6. A drive assembly according to claim 4 or 5,
**characterised in**
**that** the coupling cage (34), the cover element (53) and the coupling hub (36) enclose an outwardly sealed annular chamber, wherein the pilot coupling (24), the ramp mechanism (25) and the main coupling (26) are arranged inside the annular chamber and the magnet coil (23) outside the annular chamber.

7. A drive assembly according to any one of claims 5 or 6,
**characterised in**
**that** the cover element (53) - if viewed in half a longitudinal section - is C-shaped and forms an annular chamber which is open towards an axial end and which accommodates the magnet coil (23).

8. A drive assembly according to claim 7,
**characterised in**
**that** the magnet coil (23) is fixed to a holding element (27) which axially delimits the annular chamber and is firmly connected to the bearing support (19).

9. A drive assembly according to claim 8,
**characterised in**
**that** the holding element (27) is produced out of a ferromagnetic material.

10. A drive assembly according to claim 8 or 9,
**characterised in**
**that** the cover element (53) comprises an inner sleeve portion (57) which, by means of a bearing (58), is supported relative to the holding element (27) so as to be rotatable around the axis of rotation (A), wherein radial gaps are formed between the cover element (53) and the holding element (27).

11. A drive assembly according to any one of claims 1 to 10,
**characterised in**
**that** the coupling hub (36) is provided in the form of a sleeve which is held in a rotationally fixed way on the intermediate shaft (12) by means of a longitudinal toothing (45).

12. A drive assembly according to any one of claims 2 to 11,
**characterised in**
**that** the coupling cage (34) is rotatably supported on the coupling hub (36) by means of a bearing (42) received in the bottom part (40), and sealed relative to said coupling hub (36) by means of a rotary seal (43).

13. A drive assembly according to any one of claims 1 to 12,
**characterised in**
**that**, on its radial inside, the cover element (53) is sealed by means of a rotary seal (55) relative to the coupling hub (36) and, on its radial outside, by means of a sealing ring (54) relative to the cylindrical part (44).

14. A drive assembly according to any one of claims 1 to 13,
**characterised in**
**that** the bearing support (19) comprises at least one holding arm (32) for providing a connection with an engine or gearbox component (67) of the motor vehicle.

15. A drive assembly according to any one of claims 1 to 14,
**characterised in**
**that** the electronic control unit (86) carries out at least one control function of an engine management system and/or of a transmission management system and/or of an anti-locking system of the brakes and/or of a traction control system of the wheels (77, 78, 79, 80).

16. A drive assembly according to any one of claims 1 to 15,
**characterised in**
**that** the electronic control unit (86) controls the coupling unit (22) with an amperage of less than 5 ampere.

## Revendications

1. Agencement de transmission d'entraînement destiné à l'utilisation dans la transmission d'entraînement d'un essieu de véhicule automobile, entre un différentiel d'essieu et un arbre latéral de roue, comprenant
un arbre intermédiaire (12), qui est monté rotatif autour d'un axe de rotation (A), et dont la première extrémité est liée de manière fixe en rotation à une roue dentée de sortie (31) du différentiel d'essieu (4), et dont la deuxième extrémité est liée de manière fixe en rotation, au moins indirectement, à l'arbre latéral de roue (72);
une unité de coupleur (22) pouvant être commandée, agencée coaxialement à l'arbre intermédiaire (12) et comprenant une cage de coupleur (34) avec des disques extérieurs (35), qui est liée de manière fixe en rotation à un support de différentiel (5) du différentiel d'essieu (4), et est montée rotative par rapport à un support de palier (19), autour de l'axe de rotation (A), et comprenant également un moyeu de coupleur (36) avec des disques intérieurs (37), qui est lié de manière fixe en rotation à l'arbre intermédiaire (12), les disques extérieurs (35) et les disques intérieurs (37) étant agencés de manière alternée dans la direction axiale, et formant en commun un paquet ou empilement de disques ;
agencement dans lequel la cage de coupleur (34) s'étend, dans la direction axiale, du support de différentiel (5) jusqu'au support de palier (19), et est rendue étanche, avec son extrémité côté différentiel, par rapport à un carter (6) du différentiel d'essieu (4), au moyen d'un premier joint d'étanchéité de rotation (48), et avec son extrémité côté support, par rapport au support de palier (19), au moyen d'un deuxième joint d'étanchéité de rotation (49), la cage de coupleur (34) formant un carter fermé,
**caractérisé**
**en ce que** l'unité de coupleur (22) comprend une bobine magnétique (23), un coupleur pilote (24) pouvant être commandé par la bobine magnétique (23), un mécanisme à rampe (25) pouvant être actionné par le coupleur pilote (24) et un coupleur principal (26) qui peut être actionné par le mécanisme à rampe et comprend la cage de coupleur (34) et le moyeu de coupleur (36), et
**en ce qu'**il est prévu une unité de régulation électronique (86) comprenant un programme de stabilité électronique (ESP), à l'aide de laquelle il est possible, de réguler, en fonction d'au moins un paramètre du véhicule, le degré de blocage de l'unité de coupleur (22), ainsi que la dynamique de marche du véhicule automobile (85).

2. Agencement de transmission d'entraînement selon la revendication 1,
**caractérisé**
**en ce que** la cage de coupleur (34) présente un manchon de raccordement (38) lié de manière fixe en rotation au support de différentiel (5), une partie de fond (40) qui se raccorde à ce manchon et, se raccordant à cette dernière, une partie d'enveloppe périphérique (44) dont l'extrémité libre est rendue étanche par rapport au support de palier (19).

3. Agencement de transmission d'entraînement selon la revendication 2,
**caractérisé**
**en ce que** le manchon de raccordement (38) est lié de manière fixe en rotation à un embout de manchon (17) du support de différentiel (5), au moyen d'une liaison par emmanchement.

4. Agencement de transmission d'entraînement selon l'une des revendications 1 à 3,
**caractérisé**
**en ce que** pour fermer la cage de coupleur (34), il est prévu un élément de couvercle (53) qui est monté rotatif par rapport au support de palier (19) au moyen d'un palier ou roulement (58).

5. Agencement de transmission d'entraînement selon la revendication 4,
**caractérisé**
**en ce que** l'arbre intermédiaire (12), à son extrémité éloignée du différentiel d'essieu (4), est monté rotatif par rapport au support de palier (19), au moyen d'un palier ou roulement (18).

6. Agencement de transmission d'entraînement selon la revendication 4 ou la revendication 5,
**caractérisé**
**en ce que** la cage de coupleur (34), l'élément de couvercle (53) et le moyeu de coupleur (36) enferment une chambre annulaire étanche par rapport à l'extérieur, le coupleur pilote (24), le mécanisme à rampe (25) et le coupleur principal (26) étant agencés à l'intérieur de la chambre annulaire, et la bobine magnétique (23) à l'extérieur de la chambre annulaire.

7. Agencement de transmission d'entraînement selon l'une des revendications 5 ou 6,
**caractérisé**
**en ce que** l'élément de couvercle (53), vu en demi-coupe longitudinale, est d'une configuration en forme de C, et forme un espace annulaire ouvert vers un côté axial, dans lequel est agencée la bobine magnétique (23).

8. Agencement de transmission d'entraînement selon la revendication 7,
**caractérisé**
**en ce que** la bobine magnétique (23) est fixée sur un élément de maintien (27) qui délimite axialement l'espace annulaire et est relié de manière fixe au support de palier (19).

9. Agencement de transmission d'entraînement selon la revendication 8,
**caractérisé**
**en ce que** l'élément de maintien (27) est fabriqué en un matériau ferromagnétique.

10. Agencement de transmission d'entraînement selon la revendication 8 ou la revendication 9,
**caractérisé**
**en ce que** l'élément de couvercle (53) présente un tronçon de manchon (57) intérieur, qui est monté rotatif par rapport à l'élément de maintien (27) autour de l'axe de rotation (A), au moyen d'un palier ou roulement (58), des fentes radiales étant formées entre l'élément de couvercle (53) et l'élément de maintien (27).

11. Agencement de transmission d'entraînement selon l'une des revendications 1 à 10,
**caractérisé**
**en ce que** le moyeu de coupleur (36) est d'une configuration en forme de manchon, qui est maintenu fixe en rotation sur l'arbre intermédiaire (12) au moyen d'une denture longitudinale (45).

12. Agencement de transmission d'entraînement selon l'une des revendications 2 à 11,
**caractérisé**
**en ce que** la cage de coupleur (34) est montée rotative sur le moyeu de coupleur (36), au moyen d'un palier ou roulement (42) logé dans la partie de fond (40), et est rendue étanche par rapport au moyeu de coupleur à l'aide d'un joint d'étanchéité de rotation (43).

13. Agencement de transmission d'entraînement selon l'une des revendications 1 à 12,
**caractérisé**
**en ce que** l'élément de couvercle (53) est rendu étanche, radialement à l'intérieur, par rapport au moyeu de coupleur (36), au moyen d'un joint d'étanchéité de rotation (55), et radialement à l'extérieur, par rapport à la partie d'enveloppe périphérique (44), au moyen d'une bague d'étanchéité (54).

14. Agencement de transmission d'entraînement selon l'une des revendications 1 à 13,
**caractérisé**
**en ce que** le support de palier (19) présente au moins un bras de support (32) pour la liaison avec une partie de moteur ou de transmission ou boite de vitesses (67) du véhicule automobile.

15. Agencement de transmission d'entraînement selon l'une des revendications 1 à 14,
**caractérisé**
**en ce que** l'unité de régulation électronique (86) prend en compte et exploite au moins une fonction de commande d'un système de management du moteur et/ou d'un système de management de la transmission ou boite de vitesses et/ou d'un système antiblocage des freins et/ou d'un système de contrôle de la traction des roues (77, 78, 79, 80) du véhicule automobile.

16. Agencement de transmission d'entraînement selon l'une des revendications 1 à 15,
**caractérisé**
**en ce que** l'unité de régulation électronique (86) commande l'unité de coupleur (22) avec une intensité de courant de moins de cinq Ampère.
